# EUROPEAN PATENT SPECIFICATION

(11) **EP 1 334 475 B1**
(45) Date of publication and mention of the grant of the patent: **23.08.2006**
(21) Application number: 01996839.5
(22) Date of filing: 15.11.2001
(51) Int. Cl.: G07F 19/00

(54) **ELECTRONIC PAYMENT AND ASSOCIATED SYSTEMS**
ELEKTRONISCHES BEZAHLEN UND DAMIT VERBUNDENE SYSTEME
PAIEMENT ELECTRONIQUE ET SYSTEMES ASSOCIES

(30) Priority: 15.11.2000 GB 0027922
(43) Date of publication of application: 13.08.2003
(73) Proprietor: Haidar, Mahmoud Nabih Youssef, 75016 Paris (FR)
(72) Inventor: Haidar, Mahmoud Nabih Youssef, 75016 Paris (FR)
(74) Representative: Gallafent, Richard John
(86) International application number: PCT/IB2001/002153
(87) International publication number: WO 2002/041271

(56) References cited:
- EP-A- 0 971 327
- EP-A- 1 014 317
- WO-A-00/31699
- WO-A-00/42581
- WO-A-01/86598
- WO-A-96/13814
- WO-A-97/04609
- WO-A-98/42173

## Description

This invention relates to electronic payment and associated systems.

In the second half of the Twentieth century, the growth of intra- and international trade and commerce coincided with the growth in communications technology and of the computer industry. Financial transaction systems which had up till then been handled predominantly on a paper based system (apart, of course, from major quantities of cash transactions) became "computerised" and financial institutions equipped themselves with substantial mainframe computer systems in order both to operate their internal businesses and subsequently to substitute for existing manual systems electronic computer-based systems. Thus, the original manual clearing of cheques drawn on individual banks was replaced by an automated computer-based clearing transaction system operated by consortia of the major banks.

At the same time as these developments occurred, so did the computerisation of credit transactions and other transactions based not on the use of cash, but on the use of a plastics card, originally one simply bearing in permanent form details of the cardholder, conventionally embossed on the card, together with the cardholder's signature, but subsequently supplemented by electronically readable data usually corresponding to the card holder data and encoded in a magnetic stripe on the back of the card. This enabled the credit and charge card organisations to automate their procedures and benefit from the vast increases in computer technology and computing power to set up essentially payment systems which operated simply and effectively on a worldwide basis. More recently card technology has been extended further by the use of so-called smart cards which, in addition to embodying passive data, have electronically erasable and rewriteable memory components, and in some cases processor electronics, within them so enabling the smart card to be used in a variety of interactive applications.

In the case of both conventional magnetic stripe cards and smart cards, a major problem with the implementation of such systems is the necessity for individual traders, for example retail outlets, hotels, restaurants and the like to be equipped with special card-reading terminal equipment which, when activated, could read data on the card and provide conventionally a paper record of the transaction contemplated, the paper record conventionally being produced in duplicate and signed by the card holder in order to validate the transaction, one paper record then being kept by the card holder for subsequent checking purposes and the other being retained by the establishment with which the transaction was effected. An alternative to signing is the use of a personal identification number (PIN). The necessity for using different dedicated "point of sale" terminals has restricted the growth of such electronic transaction processing, albeit that it is now very widespread.

Likewise widespread is the very complex and sophisticated communications system which underlies this card-based transaction processing approach. Based on existing banking and credit or charge card company practices, the system has developed into a highly complex system involving substantial quantities of checking and cross-checking of the data which is captured at the point of sale terminal and this complexity, coupled with difficulties in some cases of matching individual national systems to international standards, has required the very substantial investment on a global scale by financial institutions in order to operate the system at all.

In recent years, an entirely separate technology has emerged originally directed to enabling individuals to talk to one another by telephone, but without the constraint of needing to be located where a telephone was installed. So-called mobile telephones are now ubiquitous and all developed countries have extensive mobile telephone networks, i.e. networks of transmitting and receiving stations which are designed to communicate, originally using analogue wireless technology, but, more recently, using digital wireless technology with one another and with individual users of so-called "mobile phones", i.e. transmitter receiver telephone units which are sufficiently compact and lightweight to be carried by individuals. Following the development of effective mobile telephony systems, the take-up and market penetration of mobile telephones has been astounding. Indeed, in some jurisdictions, the number of mobile telephone units in use threatens to approach or even exceed the population of the area in question.

The mobile telephone system as developed in recent years has embodied two features which, while originally developed for fulfilling clear objectives within the context of a mobile telephone network system, are applicable, as will appear below, on a broader basis to enable a new approach to financial transactions to be envisaged.

The first of these developments is the dissection of the mobile telephone unit as used by a subscriber essentially into three parts, viz. a power supply, the mobile telephony transmitter/receiver unit itself and a so-called SIM card. SIM is an acronym for Subscriber Identity Module and is one form of smart card, in which the memory "chip" among other things contains user identification details as well as its own unique identity. Thus, a mobile telephone subscriber does not require to carry around a mobile telephone unit all of the time if he or she is going to be in an environment where one is available. The subscriber can simply take such a unit, insert their own SIM card into it, and then use the mobile telephony system. This operates geographically on a very broad basis and, for example, enables the mobile's telephony network providers to establish very rapidly whether a subscriber is entitled to use the mobile telephony services in the country concerned (providing appropriate roaming agreements are in place) and, if so, it sets up all of the necessary logging and billing procedures enabling the subscriber to be billed by the telephone company in the customary fashion for use of their SIM card abroad. In order to prevent abuse of such cards (which otherwise would constitute highly desirable items for theft or other improper acquisition) they can only be persuaded to work properly when, once installed in a mobile telephony unit, they are activated by the use of an appropriate PIN number (PIN is an acronym for Personal Identification Number). The user's PIN number is conventionally a four digit number which is not written down anywhere, but merely remembered by the user in order to enable, in the case under discussion, the SIM card to be used in a mobile telephony unit.

The concept of enabling a SIM card by using a PIN number which is input once the card is physically inserted in a mobile telephony unit can be extended, particularly in the case of sophisticated SIM cards which have, when installed in a mobile telephony unit, substantial on- board processing power. Thus, it is possible to provide systems which support different services, access to those different services being enabled by the use of different PIN numbers.

In addition to the relatively small (normally just four digit) PIN numbers, each SIM card does, of course, have space for storing a unique "telephone number". It can be easily seen that just as the telephone system on a global basis provides a single unique telephone number for each subscriber, conventionally broken down into a country code, area code and subscriber number, so in a mobile telephony system, each SIM card must have a unique identification number, and, if desired, the SIM card can include other alphanumerical data of even greater length, for example an encryption key.

A second feature which has developed as part of mobile telephony is the so-called short messaging system, conveniently abbreviated to SMS. This system was originally designed to emulate so-called pager systems, i.e. to enable the automatic display of a short message on the screen of mobile telephone unit in a fashion similar to that displayed by a conventional pager. However, because of the physical presence of a functional keyboard for use when making telephone calls, the system was developed so that individual mobile telephone units were adapted not merely to receive "pager" messages and display them, but could also construct them and send them. Because the mobile telephony systems work on a cellular basis and accordingly there needs to be continuous monitoring by the network as to which mobile telephone units are present within any given cell, there is a continuous interchange between each mobile telephone unit (provided, of course, that it is switched on) and its nearest base station. Small messages can easily be exchanged between receiving unit and base station at the same time and, provided that the necessary standards are applied to force an appropriate message format, outgoing messages can then be directed to the appropriate receiver and incoming messages received by the desired recipient. Because the short messaging system piggybacks on to the overall network monitoring, the cost of sending short messages is very reduced compared with the cost of making a mobile telephone call, which has led to its adoption particularly among young people who have mobile telephone units, but do not wish to pay the substantial costs involved if these are used substantially for voice telephony.

US-A-5719918 suggests combining the SMS used in mobile telephone systems with point of sale terminal technology. The proposed transaction handling system is essentially directed to enabling point of sale type transactions to be effected using the SMS feature of mobile telephony in conjunction with existing point of sale technology. WO 98/42173 discloses a bank self-service computer system and means to interact with it by using mobile telephony.

The present invention provides a financial transaction processing system as described in the accompanying claims

As described below, there is provided a financial transaction processing system which combines the facilities of mobile phone systems using SMS with existing payment clearance systems, enabling a mobile telephone user to carry out a wide variety of transactions. By equating the mobile telephone number with a payment number (which can be thought of in some senses as equivalent to a subscriber's bank account number), it is possible to produce financial transaction systems which operate rapidly and, more particularly, securely.

In this connection, use can be made of the existing security systems built into mobile telephony networks. These include not merely the SIM card identification systems identified above, together with the use of one or more PIN numbers known to the user but not to third parties, but they also include encryption which may be carried out to whatever level is deemed appropriate having regard to the nature of the transaction concerned and which, since the nature of the transaction must clearly be specified, can be adjusted automatically by appropriate software control.

Because of the nature of the mobile telephony system, it is also possible to provide that software control where desired, e.g. in the SIM card itself, or in the computer system or server forming part of the network base station, or even more centrally forming part of the central network control computer installation.

In its simplest form, a user of a mobile telephone unit operating in accordance with such a system and desiring to pay a third party need only compose a short message identifying the third party by means of its payment number and the account to be paid and providing such other details as may be appropriate to the transaction in question such as when the transaction is to be effected, whether confirmation of the transaction is required a tracking number, invoice number and any other standard acknowledgements or collateral information requests. The user of the system may choose the appropriate level of security or the system itself may apply the same and once the message has been composed and checked, it can be sent in the standard fashion. The programming on the SIM card may include means to guide the user through the procedure to compose the message in order that the message meets formal requirements such as standardised message structure.

Clearly, in order to support such payment procedures, existing financial transaction settlement systems (for example a credit card clearance system or a direct bank account to bank account clearance system) need to be capable of receiving a message sent via SMS, extracting the relevant information from that message and then processing it, and this is an essential threshold activity for financial institutions before they can make use of the system, but such activity only needs to be done once whereafter the financial institution concerned is transaction-enabled for operating in accordance with the system constituting the present invention.

The processing of the data in the short message into a form acceptable to an automated electronic settlement system may take place where desired. In particular, the mobile telephone network system may be provided with a number of servers to one of which each payment instruction message is directed and which is appropriately programmed to carry out the necessary validation and/or decryption steps and then to process the data in the short message into the appropriate input format for the particular settlement or clearing system in question. The servers may naturally be located where desired, either physically in the control of the telephony network provider, or under the physically secure control of the payment or clearing system itself. The server may be programmed as desired to send automatic transaction receipt messages back to the original sender of the short message and additionally, since the recipient is also going to have a payment number, additionally to the recipient, so that in quick, clear and efficient fashion, the payer knows that the payment is being processed and the payee knows that too. The level and complexity of such acknowledgement messages can vary according to whatever is desired, for example from a simple statement that a payment has been made by an identified individual through to greater detail as to the amount and any associated reference, for example an invoice number or date or other transaction identifier.

In order to enable the individual user to transact business using the system in accordance with the invention, a "sign on" procedure may be effected, but because of the already existing unique tracking and identification data associated with the user of the SIM card, establishing a secure subscription system is relatively straightforward and does not normally require extensive collateral checking, this already having been carried out by the telephone network supplier. Accordingly the subscription process can be simple and automated and can involve the automatic downloading from the network system into the microchip on the SIM card of the necessary programming to enable SMS message construction in the correct format for the transaction system.

Although reference has been made above to mobile telephone units, this should be interpreted broadly to cover not only the standard hand-held mobile telephone unit including a SIM card and enabling SMS to be used, but should be taken to include any more sophisticated personal communication devices such as WAP telephones or palm-top computers with mobile telephone access capacity. Indeed, other devices can be conceived which would not be normally regarded as mobile telephone units since they do not support voice telephony, but which are capable of providing appropriately standardised formatted small messages. For example, a laptop computer or even a PC could be appropriately programmed to format such messages and then transmit them via a wireless or land line telephone connection.

It should be clearly appreciated that the simple electronic payment system in accordance with the invention explained above is capable of substantial and flexible extension to enable it to operate within a variety of sophisticated business transaction frameworks and, in particular, it may be used in a number of straightforward common financial transaction scenarios. For example, if a user desired to purchase something located on the Internet, providing that the website provides details of a payment number, the user can simply compose a small message which, once transmitted, will make the relevant payment, either on a default basis, e.g. by registering the transaction with the user's credit card company or charge card company, or on a direct debit of the user's personal account basis.

Many financial transactions are not in the nature of voluntary purchases, but rather for settlement of regularly incurred debts, for example to a utility company, mortgage company, local authority or the like. Using appropriate software, the computer system in the utility, local authority or the like can send a short message to the consumer's mobile telephone unit and the programming in that unit may be such that payment may be effected simply by keying the "yes" button and, for obvious security reasons, keying in an appropriate PIN number.

Even more simply, if one person wishes to transfer money to another, this can likewise be achieved by means of a short message, with the money going into the recipient's default account unless specified otherwise. Of course, in that scenario, the receipt of the money is not physical, but rather simply a reflection in a stored balance with e.g. a bank, building society or other financial institution. However, financial institutions are nowadays used to the provision of systems which can actually place cash in the hands of their account holders, viz. the worldwide network of automatic teller machines and their associated servers and communications infrastructure. If an ATM is identified with a payment number, someone provided with a mobile telephone unit standing by that ATM can telephone a benefactor and if the benefactor is willing, the benefactor can then, using the transaction system in accordance with the invention, send a short message embodying the payment number of the ATM to the financial institution of their choice, whereupon that financial institution will debit the benefactor's account and cause the ATM to disgorge the relevant cash.

The system may also be used for the secure transfer of monies into accounts held by employees, for example for payroll, commission or reimbursement of expenses purposes, all of which may be generated automatically in appropriately information-rich short messages into a banking payment clearing system. Payment advice may appear as a short message on the recipient's mobile telephone unit. Business to business payments may be cleared in similar fashion, again with short messages generated by the business' server running its accounting system, again with the account from which payment is taken being chosen by the payer appropriately and likewise the account into which the money is remitted being chosen by the payee appropriately. Finally, the system may be used in conjunction with customer lists, for example selected on a highly targeted basis following a data mining exercise on past consumer performance. For example, a DVD production company may offer the latest DVD for purchase to a selected group of customers who have purchased similar DVDs in the past, again with the small message enabling the recipient to see what is on offer and if it is desired to purchase simply so indicating by pushing the "yes" button and inputting a PIN number.

Numerous other applications will occur to operators of the transaction systems in accordance with the invention.

One very specific side effect of the transaction system in accordance with the invention is the ease with which virtual accounts may be created essentially in a virtual space analogous to (but separate from) the "cyberspace" of the internet world. The recipient of money may choose not to have that money credited to a pre-existing bank, building society or the like account, but merely credited to a "virtual account" essentially resident in the memory of a server operated as part of the mobile telephony system, or, indeed, some other dedicated payment server operated elsewhere, for example by an Internet service provider. So long as the recipient of the money can, using appropriate security measures, access the relevant server to determine the virtual balance held, they can regard that balance as simply being in a virtual account and, of course, spend it as necessary, with the amount to spend then being debited from that virtual account and credited to the virtual or real account of the payee. Banks or credit card companies are well placed to provide appropriate servers as they are already trusted parties for taking care of other people's money. In place of the ability of the customer to access the server to determine the balance in such a virtual account, the system may be programmed to provide periodic statements of account, for example by conventional e-mail a dedicated Internet secure portal or via a small message service, or the SIM card may be programmable to provide a constant tally of the balance.

It will be appreciated that in the course of implementation of the electronic payment system described above, a fundamental requirement is that each party which is to receive or to dispense a payment must be associated, and uniquely associated, with the payment number, conveniently thought of as the mobile telephone number. It should be observed that once each individual is so equipped, he or she may also be able to make or receive an appropriate payment via other financial transaction systems provided those systems are appropriately able to make the proper correlation between the payment number input by the person concerned and one or more PIN numbers which the person concerned remembers. Thus, once such identities are established within the context of a mobile telephony system, by means of a suitable interface between that system and, say, the banking ATM system, someone needing money in cash and having an account anywhere can, provided the GUI of the ATM is of appropriate functionality punch in first their payment number followed by one or more PIN numbers in order to enable the ATM thereafter to dispense the appropriate amount of cash with that payment being debited to the user's account. Other telecommunication systems may be used analogously provided that somewhere on the system is a server with appropriate functionality and provided that the system is connected to a system that recognises the payment number and can correlate the PIN numbers which go with it.

By way of illustration, a transaction processing system in accordance with the present invention is described hereinafter in more detail with reference to the accompanying drawings in which
Figure 1 shows a sequence of screen displays as might be viewed by a user of the system initially subscribing to the system and subsequently carrying out a transaction;
Figure 2 is a schematic diagram of a sophisticated system showing interaction between various functional units, and
Figures 3 to 9 are diagrammatic illustrations representing seven different types of transaction which may be carried out.

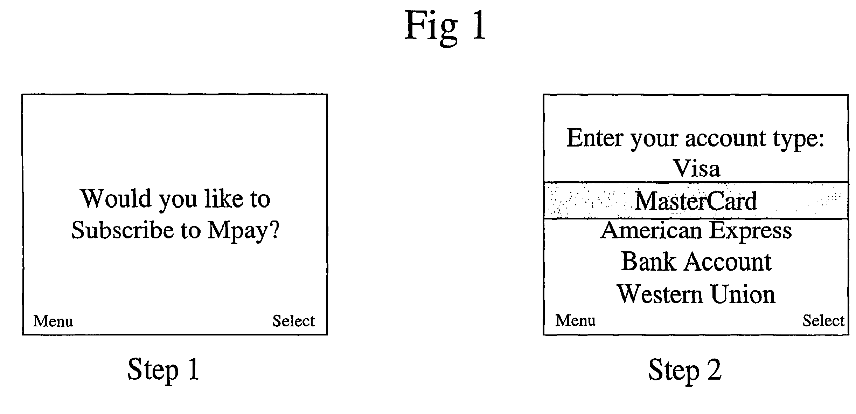

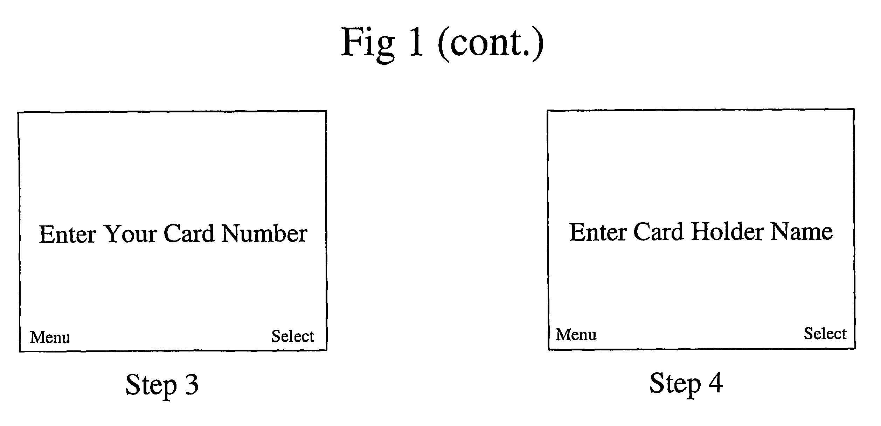

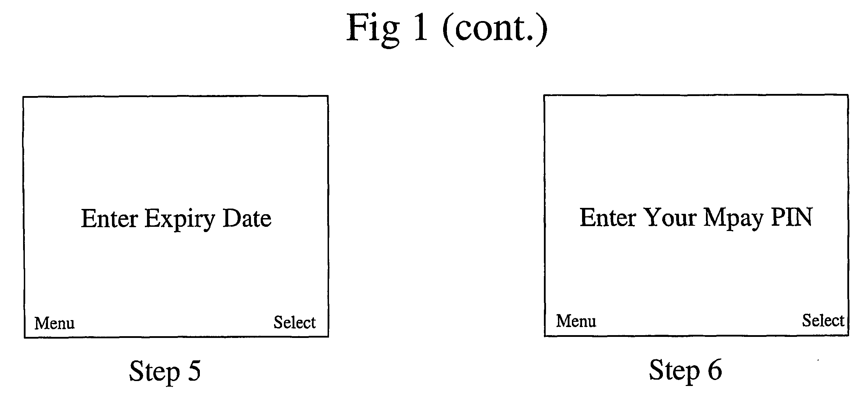

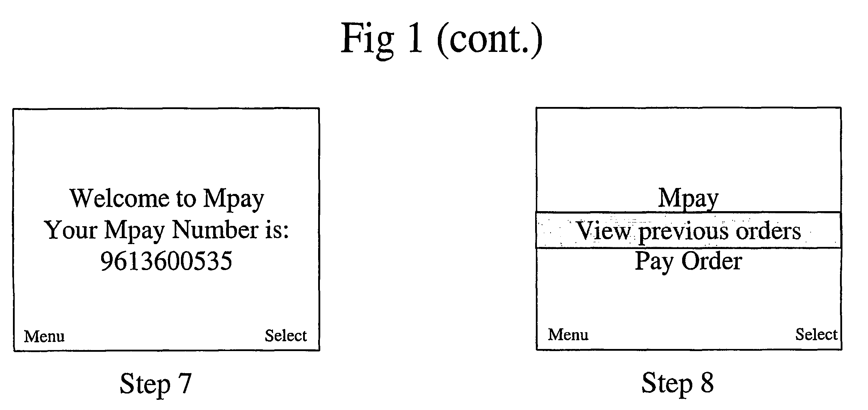

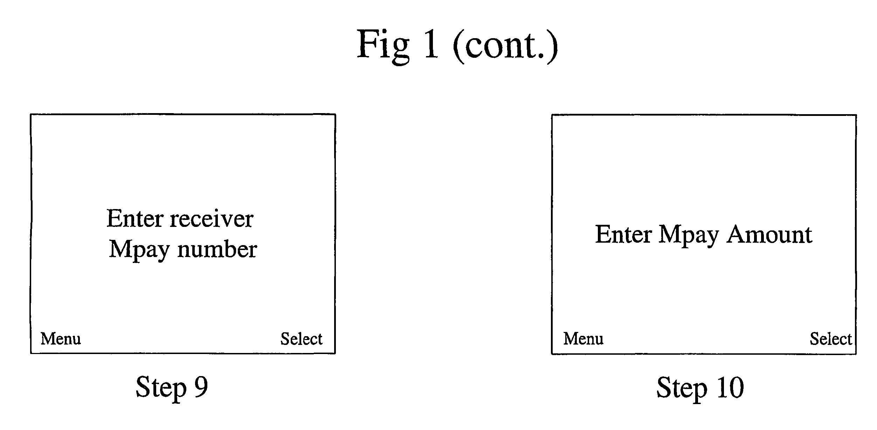

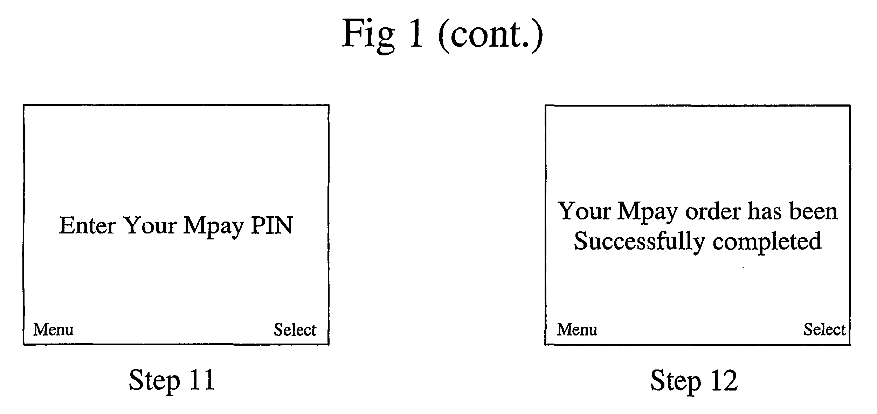

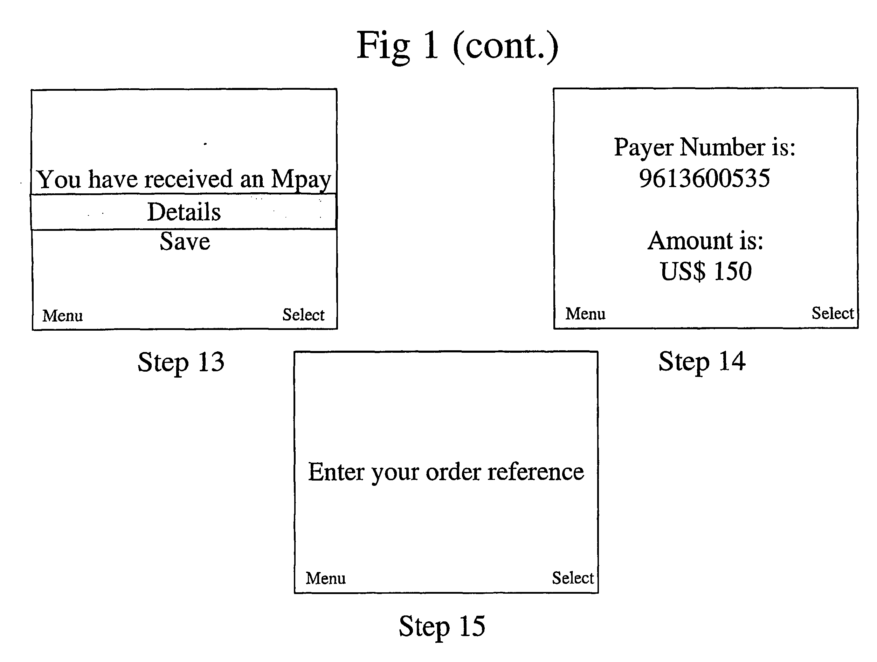

Referring first to Figure 1, this shows in a sequence of fifteen frames a typical screen display as might appear on a mobile telephone hand-held unit. Common to each display is the presence of a number of icons indicating time, signal strength, battery condition, etc. In order to subscribe, the user naturally calls the telephone network provider, the particular call number being one which may be publicly advertised, or receives a subscription software on his mobile unit. This produces the screen display identified as step 1 and as evident from Figure 1, this is in the form of a question which, on answering "yes" using the "yes" button on the mobile telephone unit, promptly causes the display shown in step 2 to appear, whereon the account type can be selected using the select button. Thereafter the sequence of prompts proceeds through steps 3, 4, 5 and 6, this last requesting the would-be subscriber to enter a PIN number which can be chosen by the subscriber as they wish. Once that has occurred, the system may generate a payment number which is in fact the number of the telephone, which may already have been stored in the SIM card, or which may actually be assigned by the network provider's server if the telephone unit has not previously been used. The screen display then moves to that shown in step 8 which gives two "Mpay" options, Mpay being an acronym for the system itself. The first option is to view previous instructions (the SIM card stores previous messages for a considerable period of time and enables them to be retrieved and viewed), or to execute a payment order. If the second of these is chosen, the screen display shown in step 9 emerges prompting the user to enter the payee's Mpay number, which is the telephone number of the payee, and then the amount to be paid followed by the PIN number to validate the payment. If the order has not been able to be successfully completed, for example due to refusal to honour the transaction by your credit card company, or some other like dire calamity a different message is shown. Otherwise, the message emerges to show that your account has been debited.

At the recipient's mobile telephone unit, the SMS causes a display to emerge as shown in step 13 with a menu enabling the user to look at the details straight away, in which case they emerge as shown in step 14, or to save the details and look at them later when desired.

Step 15 in Figure 1 shows an alternative display which may be necessary, for example, when ordering goods over the system where, for example, a reference to a particular book or other purchaseable item may need to be attached to the payment instructions.

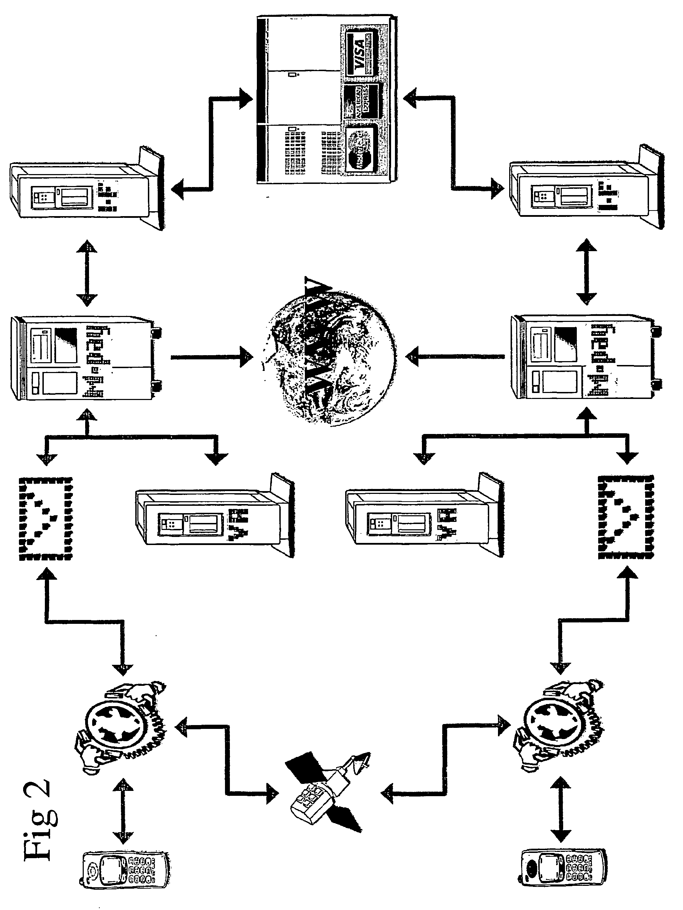

Figure 2 shows a variety of possible interconnections which may be made between various systems in a fully functioning payment system in accordance with the invention. Shown on the left are representations of two mobile phones which may each be in two-way communication (indicated by the double-headed arrow) with a network service provider shown by an icon including two telephone handsets surrounding a stylised world. Those networks may communicate via a communications satellite and each is able to send small messages, indicated by the envelope icon, to an Mpay server denoted Mpay which forms the backbone of the system. Mpay servers may transmit messages, for example, standard form e-mails to subscribers via the Internet/World Wide Web, but, for security reasons, appropriate technical means are employed to ensure that the communication is one way, i.e. information may be inserted into the World Wide Web to reach the appropriate recipient, but it is not possible to access the Mpay server from the Internet.

Each of the Mpay servers illustrated is in two-way communication with an appropriate interface which in turn communicates with a standard payment clearing system, for example as illustrated in the Figure 1 operated by a major credit card company. Although the interface is shown on a separate system from the Mpay server, it may be designed to consist of an integral part of this server as well, and hence constitute a component of the Mpay server itself.

Also shown on the Figure is the possibility of providing a virtual account resident in a virtual account server which is in two-way communication with the Mpay server and the SMS system. Although the virtual account is shown as a separate system from the Mpay server, it may be designed to consist of an integral part of this server as well, and hence constitute a component of the Mpay server itself.

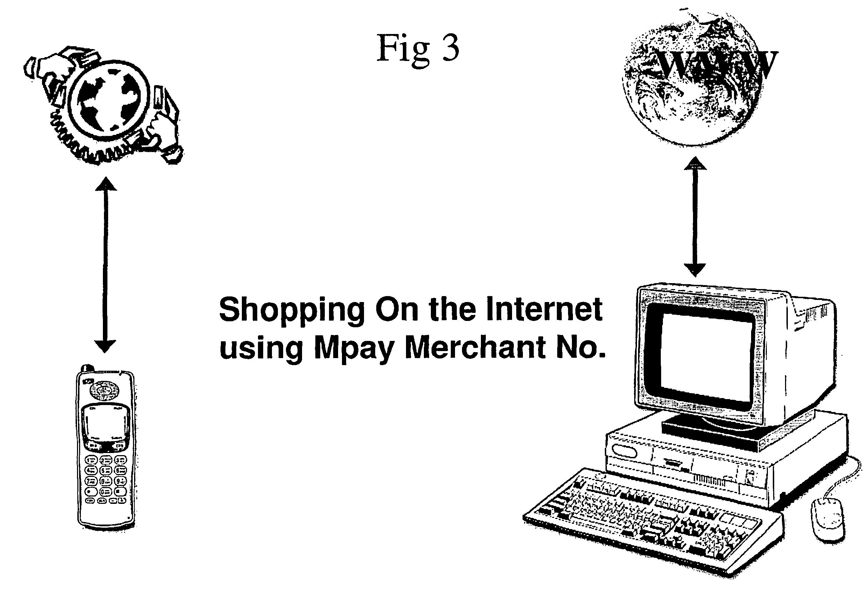

Figures 3 to 9 show graphically the various types of common transaction discussed in general terms above. Figure 3 shows a typical Internet shopping transaction with the user's mobile phone communicating with the mobile phone network, and with the user putting the Mpay emergent number into the small message. Once the order has been acknowledged and/or the payment received depending upon the choice made by the owner of the relevant website, and, in addition to the Mpay SMS payment acknowledgement, the vendor may send via the Internet an appropriate e-mail acknowledgement.

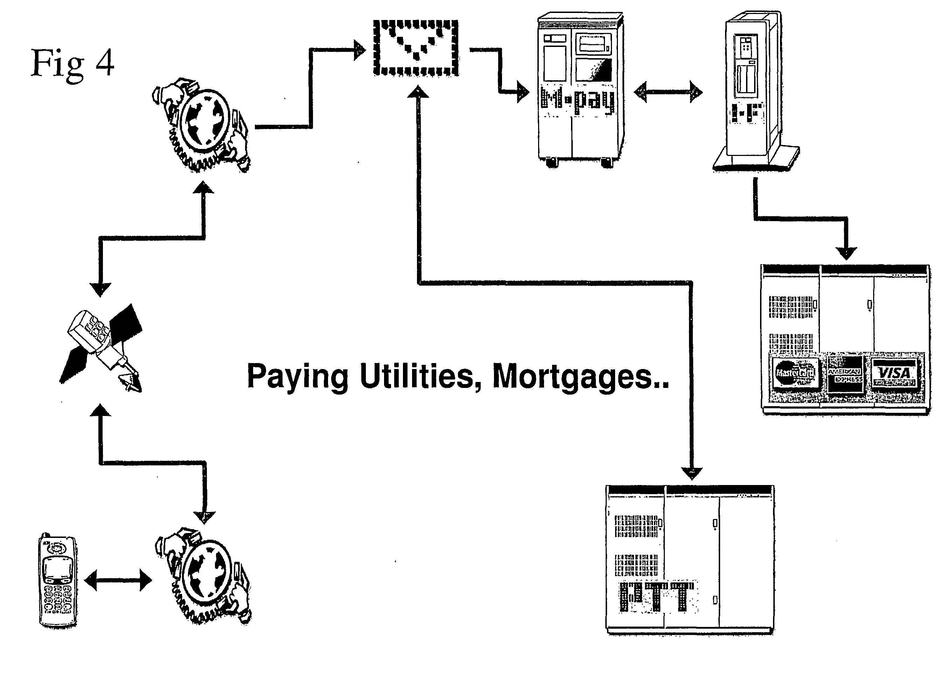

Figure 4 shows a system of which most parts will be instantly recognised from the description of Figure 2 above. However, as can be seen, there is a two-way connection between the SMS and a utility server here denoted PTT.

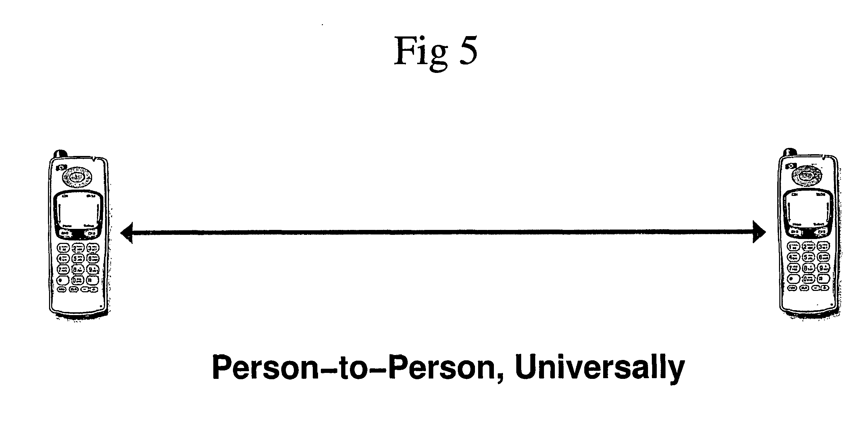

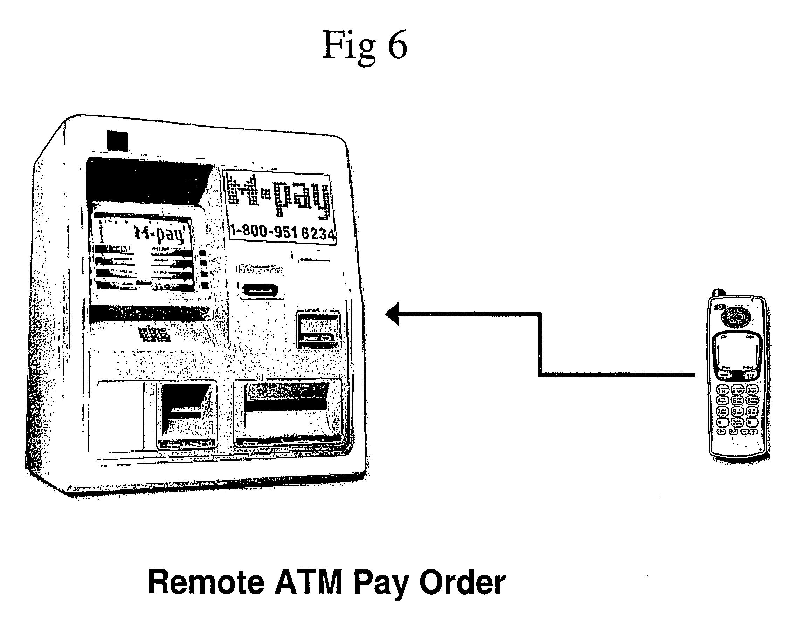

Figure 5 shows diagrammatically the simplest possible case of one person transferring money to another while Figure 6 illustrates the possibility of someone with a mobile telephone unit actuating an automatic teller machine once they are aware of the telephone number of that machine, denoted in the drawing as an 800 number in customary fashion.

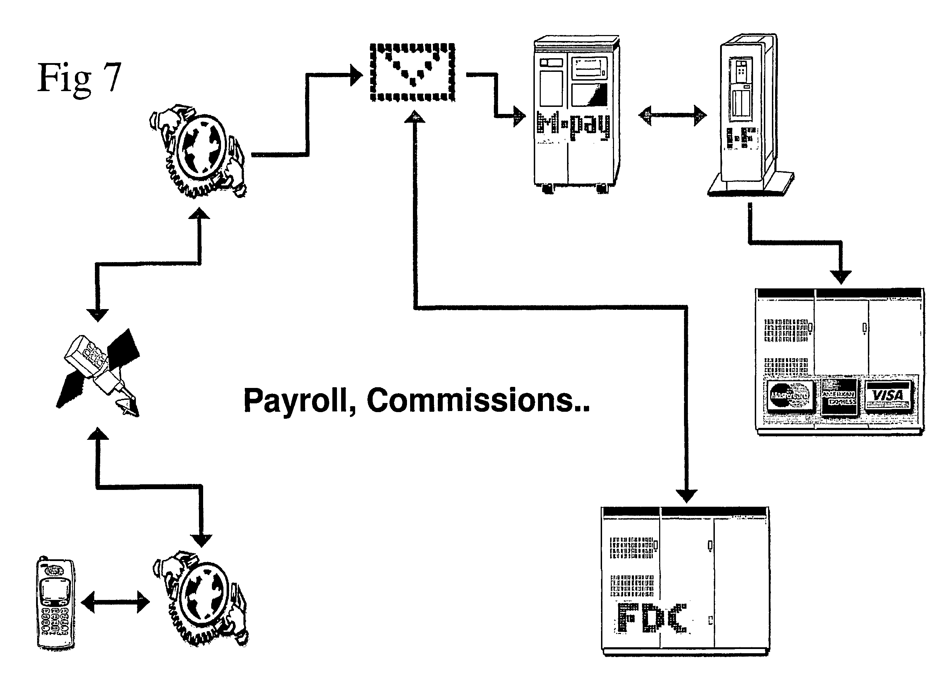

Figure 7 shows the arrangement used for paying a workforce, with the accounts system server of the employer being denoted FDC on that drawing.

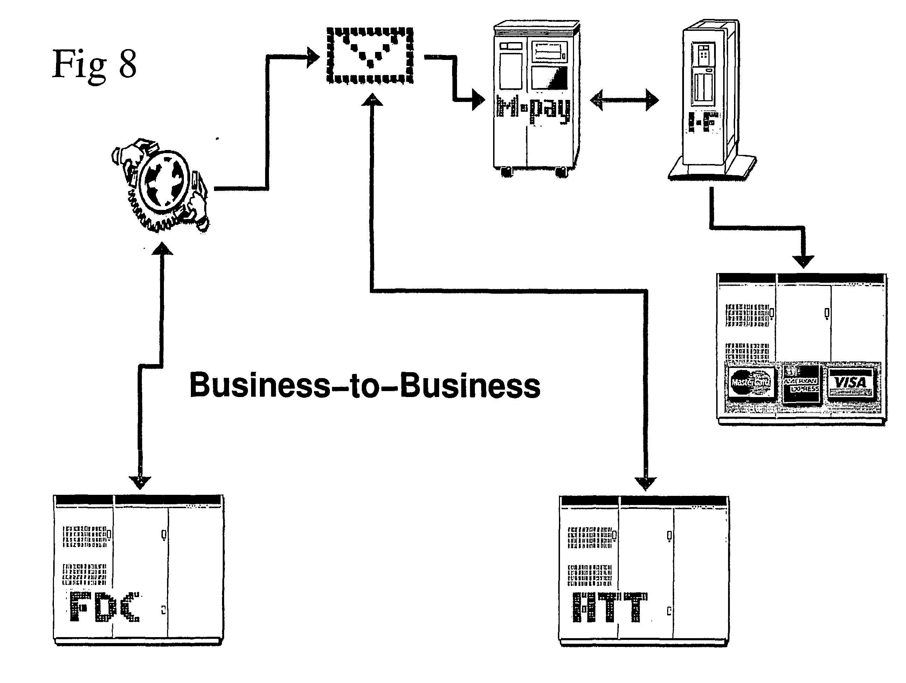

Figure 8 shows the business to business arrangements where the accounting servers of two corporate bodies, noted FDC and ATT on the drawing, both communicate with the Mpay server.

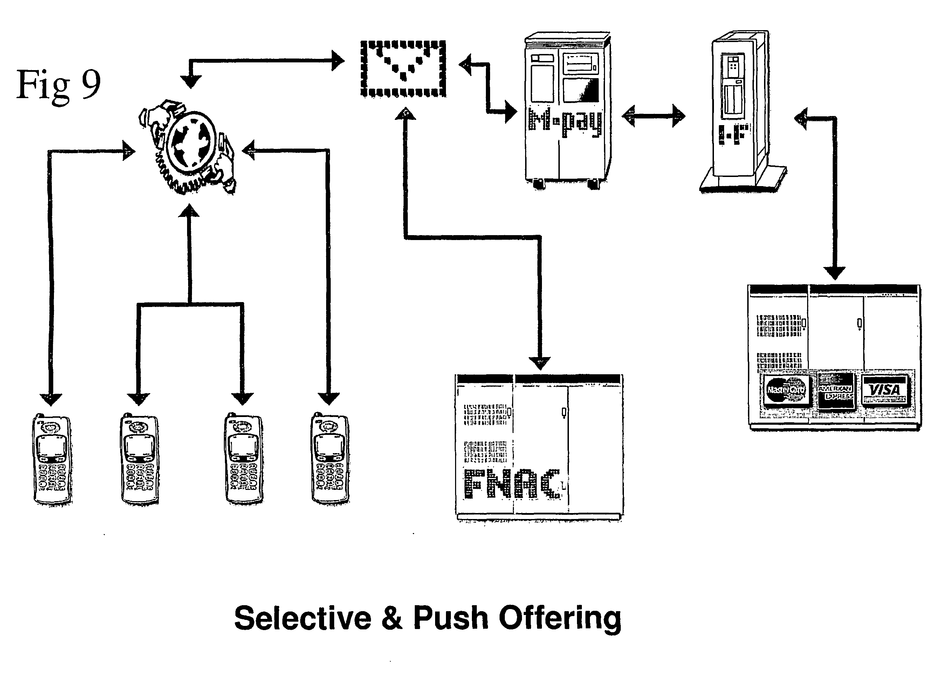

Finally, Figure 9 shows the use of the system to exploit push marketing opportunities. The in-house server of a retail operation, denoted FNAC in the drawing, sends notification to the four users illustrated using the SMS that, for example, a new DVD is available. By indicating acceptance of the offer and validating that acceptance by the use of a PIN number, the SMS system then communicates with the Mpay server to deal with the payment and with the retail operations server to advise that an order has been received and provide either automatically or following interrogation of the Mpay server by the FNAC server relevant physical delivery details such as a postal address.

As can be seen from the foregoing, the present invention provides, overall, a system for effecting payments, wherein the system comprises: at least one terminal (typically a mobile station) that includes an application means for using the payment system, and a telecommunications network ensuring an exchange of messages (e.g. SMS); wherein said system for effecting payments further comprises: at least one payment system server which has means of communications with the telecommunications network and means to store and process payment instructions as well as to interface to outside respective payment clearance systems (e.g. credit card processing systems/networks); and wherein the payment system comprises means for transferring data and instructions between the mobile station and the respective payment clearance system.

Preferably in such a system, at least one payment reception system has means to receive messages from the payment system and/or from payment clearance systems, or has itself means of using the payment system.

The payment system means for effecting payments of different natures are: means for loading the terminal with means of accepting payment instruction details, means for ensuring authentication of the terminal user, means for securing personalised secure use of the payment system, means for encrypting the payment instructions, means for exchanging payment instruction messages through the telecommunications network, means for exchanging messages with the telecommunications network, means for decrypting the payment instruction messages, means for creating records of payment system users in the payment system server, means for processing payment instructions, means for exchanging payment instructions with payment clearance systems, means for registering transactions in subscribers' respective accounts, means for composing respective acknowledgement and information messages to payers and payees, means for sending out transaction and statement reports for subscribers, means for billing subscribers, means for subscriber claim handling, means for payment server data mining, means for third-party use of subscriber transactions' data for promotion.

The overall system may be configured to provide the following benefits and advantages:
a. Easy-to-subscribe payment system: The willing user either calls a service telephone number for reception of the subscription means, or is sent the same over the air through the known and applicable techniques in mobile telecommunications. The user then enters the required subscription data and the means with which his terminal are equipped will take care of securing the data entered before sending them automatically after confirmation, through the telecommunications network in place, to the respective payment system server. The user needs to enter the data in question only at the time of subscription. Data entered may include one or more payment personal identification number (PIN) for personalisation and authentication of later payment services. Other modes of subscription could also be implemented, such as paper or electronic subscription forms as are widely used in financial services in various applications.
b. Easy-to-use payment system: Once subscribed, the user then uses the means provided for effecting (including receiving) payments through automatic user-friendly guidelines requesting the input of respective payment details. Payment PIN(s) take care of ensuring authentication and security of use of concerned terminal. Reception of acknowledgment message(s) by the system serve to provide immediate follow-up, transactions account and proof-of-payment. On another account, the use of the mobile telephone number as the payment number suggests a clear convenience of use especially for mobile users.
c. Security: Overall, the payment system security is ensured as follows: tamper-proof systems are used in mobile units (Smart-card SIM), various encryption and data protection means are added on top of the means for effecting payments in terminals, Payment PIN(s) are used for authentication and security, Telecommunications Network security ensures data transfer security, security means are applied in data transfer to and from payment system servers and with payment clearance systems, Unique numbering system used in world telephony, Trace and Track means of telecommunications messaging systems especially providing for unique and tamper-proof system of message identification, billing data and historical subscribers accounts.
d. Telecommunications systems adaptability: The payment system could be used in digital mobile systems, analog mobile systems, fixed and satellite systems, paging and personal digital assistants (PDA) systems, web-based and proprietary data exchange systems, and future generation telecommunication systems (e.g. 2.5G, 3 G systems).
e. Addressable User Base: Terminals may include Mobile digital or analog handsets, PDA's, PC's or any terminal communicating through an adaptable telecommunications network.
f. Spectrum of payment applications: Payment system ensures, through the implementation of interfacing to the various existing and future payment clearance systems means in the payment servers, the applications of payment including: micro-payments, person-to-person, consumer-to-business, business-to-consumer, business-to-business, user-to-automated systems (e.g. ATM application), Web-based, automatic bill-settlement, payment-by-proxy and push-offering. All the applications taking place remotely if desired.
g. Types of User accounts: With interfacing means, the payment system allows for the implementation of the payment service applications for subscribers choosing to use cash (against payments at cash counters), bank accounts or plastic card accounts, and introduces virtual accounts as well.
h. Scalability: The server nature of the payment system allows for a modularity and high scalability in implementation. On the other hand, it allows for flexibility of adoption for payment providers.
i. Territorial coverage: Due to interconnection amongst Telecommunication networks, and the use of standard global technologies of messaging and interfacing, especially using the roaming arrangements in the mobile systems, the payment system could be implemented on a global basis.
j. Performance: Due to the advance and proliferation of effective communications means, the payment system performance is unequal in the known worldwide payment systems. The backbone of payment instructions, equated to the telecommunications networks' signals, ensures a highly efficient payment system handling capacity.
k. Cost: The very nature of telecommunications network signalling in the mobile networks ensures a very low cost of payment transactions. On the other hand, the means of interfacing with the existing and future clearance and merchant payment systems ensure a minimum change requirement in terms of equipment and procedures for payment parties. Also, the server architecture of the payment system ensures a low-investment scalable approach for the adopting payment provider(s). All combined, this should reflect in a low payment transaction cost to the benefit of the user, the merchant and the payment providers(s).
l. Time-to-Market: The nature of the payment system server, and the standard interfacing and interconnection means used in the design and conception of the system, ensure a fast deployment advantage, a low cost of subscriber acquisition, and a modular growth service coverage.
m. Advantage to the user: Aside from convenience, mobility and security, the subscriber will enjoy a higher degree of mobility in payment applications, an increase of productivity/efficiency, a one-point all-payments system, a set of unprecedented applications (e.g. remote person-to-person, remote ATM, remote payment-by-proxy, virtual accounts etc.) and, most important, a consequent considerable cost advantage in payment charges.
n. Advantage to the merchant: Acceptance and security of a larger base of customers, remote selling, remote promotion and consequent cost advantage of payment handling cost.
o. Advantage to the payment provider(s): The payment provider is capable of addressing a large mobile and fixed user base, effect payments more efficiently and at a higher security. Also, the cost advantage in automation and inherent transaction cost will substantially reduce its service cost. All combined, the provider(s) will be attracting more transactions through its system, taking share out of electronic and non-electronic payment means and pioneering a highly competitive market where subscribers are likely to stay attached to their provider, as they are attached to their telephone calling numbers.

## Claims

1. A financial transaction processing system comprising a mobile telephony system having a limited length message service facility, a plurality of computer-based payment processing or clearance systems adapted to link to a network of automatic teller machines, and **characterised by** payment system server interface means, wherein the payment system server interface means is arranged to enable limited length messages sent from a mobile telephone user to be input into one of the plurality of payment processing or clearance systems and by software controlling the one of the plurality of payment processing or clearance systems to enable the interface means to validate the limited length message sent and to action, following such validation, a payment transaction resulting in the issuing of currency from an ATM.

2. A financial transaction processing system according to Claim 1 wherein the mobile telephony system includes SIM card identification for automatic validation and is supplemented by a personal identification number (PIN) additional check.

3. A financial transaction processing system according to Claim 1 or 2 wherein the mobile telephony system is adapted to encrypt limited length messages and the interface system is adapted to decrypt such messages.

4. A financial transaction processing system according to any one of Claims 1 to 3 wherein the mobile telephony system includes a programmable message composition facility enabling details of a desired transaction to be input in structured fashion into a mobile telephone handset to compose a standardised transaction instruction-containing message formatted to be recognised by the payment clearance system.

5. A financial transaction processing system according to any one of Claims 1 to 4 wherein the plurality of payment processing or clearance systems are programmed, following the execution of a payment transaction, to construct and send a limited length message to a mobile telephone unit forming part of the mobile telephony system.

## Patentansprüche

1. Ein System zur Bearbeitung von Finanztransaktionen umfassend ein mobiles Telephoniesystem mit einer Einrichtung für einen Dienst zum Versenden von Nachrichten begrenzter Länge, einer Mehrzahl von Computergestützten Systemen zur Bearbeitung oder Freigabe von Zahlungen, die eingerichtet sind, sich mit einem Netzwerk von Geldautomaten zu verbinden, und **gekennzeichnet durch** ein Zahlungssystemserver-Schnittstellenmittel, wobei das Zahlungssystemserver-Schnittstellenmittel eingerichtet ist, um zu ermöglichen, dass von einem Benutzer eines Mobiltelefons gesendete Nachrichten begrenzter Länge einem System aus der Mehrzahl von Systemen zur Bearbeitung oder Freigabe von Zahlungen eingegeben werden und dass **durch** Software das eine System aus der Mehrzahl von Systemen zur Bearbeitung oder Freigabe von Zahlungen gesteuert wird, um dem Schnittstellenmittel zu ermöglichen, die Gültigkeit der gesendeten Nachricht begrenzter Länge zu bestätigen und nach einer solchen Bestätigung, eine Zahlungstransaktion zu veranlassen, die zu der Ausgabe von Bargeld aus einem Geldautomaten führt.

2. Ein System zur Bearbeitung von Finanztransaktionen nach Anspruch 1, bei dem das mobile Telephoniesystem eine SIM-Karten-Identifikation zur automatischen Gültigkeitsbestätigung enthält und durch eine zusätzliche Kontrolle mit einer persönlichen Geheimzahl (personal identification number, PIN) ergänzt wird.

3. Ein System zur Bearbeitung von Finanztransaktionen nach Anspruch 1 oder 2, bei dem das mobile Telephoniesystem eingerichtet ist, um Nachrichten begrenzter Länge zu verschlüsseln, und das Schnittstellensystem eingerichtet ist, um solche Nachrichten zu entschlüsseln.

4. Ein System zur Bearbeitung von Finanztransaktionen nach irgendeinem der Ansprüche 1 bis 3, bei dem das mobile Telephoniesystem eine programmierbare Einrichtung zur Nachrichtenzusammenstellung enthält, die ermöglicht, Einzelheiten einer gewünschten Transaktion in strukturierter Art und Weise in das Handgerät eines Mobiltelefons einzugeben, um eine standardisierte Nachricht mit Transaktionsanweisungen zusammenzustellen, die so formatiert ist, dass sie von dem Zahlungsfreigabesystem erkannt wird.

5. Ein System zur Bearbeitung von Finanztransaktionen nach irgendeinem der Ansprüche 1 bis 4, bei dem die Mehrzahl von Systemen zur Bearbeitung oder Freigabe von Zahlungen so programmiert ist, dass diese Systeme nach der Ausführung einer Zahlungstransaktion eine Nachricht begrenzter Länge zusammenstellen und an ein Mobiltelefon senden, das Teil des mobilen Telephoniesystems bildet.

## Revendications

1. Système de traitement de transaction financière comprenant un système de téléphonie pour mobiles comportant une fonctionnalité de service de messages de longueur limitée, une pluralité de systèmes de traitement ou d'autorisation de paiement à base d'informatique conçus pour créer une liaison avec un réseau de distributeurs automatiques de billets, et **caractérisé par** un moyen d'interface de serveur de système de paiement, dans lequel le moyen d'interface de serveur de système de paiement est agencé pour permettre à des messages à longueur limitée, envoyés depuis un utilisateur de téléphone mobile, d'être appliqués en entrée à l'un de la pluralité de systèmes de traitement ou d'autorisation de paiement et, par le biais d'une commande logicielle de l'un de la pluralité de systèmes de traitement ou d'autorisation de paiement, pour permettre au moyen d'interface de valider le message à longueur limitée envoyé et d'effectuer, après une telle validation, une transaction de paiement résultant en la distribution d'espèces à partir d'un distributeur automatique de billets.

2. Système de traitement de transaction financière selon la revendication 1, dans lequel le système de téléphonie pour mobiles comprend un identificateur de carte SIM en vue d'une validation automatique et est complété par une vérification supplémentaire du numéro d'identification personnel (PIN).

3. Système de traitement de transaction financière selon la revendication 1 ou 2, dans lequel le système de téléphonie pour mobiles est conçu pour crypter des messages de longueur limitée et le système d'interface est conçu pour décrypter de tels messages.

4. Système de traitement de transaction financière selon l'une quelconque des revendications 1 à 3, dans lequel le système de téléphonie pour mobiles comprend une fonctionnalité de composition de messages programmable permettant d'appliquer en entrée, dans un combiné de téléphone mobile, d'une manière structurée, des détails d'une transaction souhaitée afin de composer un message contenant des instructions pour une transaction standardisée formaté pour être reconnu par le système d'autorisation de paiement.

5. Système de transaction financière selon l'une quelconque des revendications 1 à 4 dans lequel la pluralité de systèmes de traitement ou d'autorisation de paiement sont programmés pour, à la suite de l'exécution d'une transaction de paiement, élaborer et envoyer un message de longueur limitée à une unité de téléphone mobile faisant partie du système de téléphonie pour mobiles.
